# EUROPEAN PATENT SPECIFICATION

(11) **EP 2 184 475 B1**
(45) Date of publication and mention of the grant of the patent: **07.03.2012**
(21) Application number: 08168759.2
(22) Date of filing: 10.11.2008
(51) Int. Cl.: F02D 41/40, F02D 41/02, F01N 9/00

(54) **Enhanced diesel particulate filter service regeneration method**
Verbessertes Dienstregenerationsverfahren für Dieselpartikelfilter
Procédé de régénération amélioré d'un filtre à particules diesel

(43) Date of publication of application: 12.05.2010
(73) Proprietor: Ford Global Technologies, LLC, Dearborn, MI 48126 (US)
(72) Inventor: Harmsen, Jan, 6369 BX Simpelveld (NL); Brook, David Jonathan, Brentwood, Essex CM13 2UF (GB); Castellano, Javier, Billericay, Essex CM12 0ST (GB); Wright, James, Leytonstone, London E11 4DJ (GB)
(74) Representative: Drömer, Hans-Carsten

(56) References cited:
- EP-A- 0 196 421
- EP-A- 1 918 542
- WO-A-2008/054632
- FR-A- 2 872 206
- US-A1- 2007 199 312

## Description

The invention relates to a regeneration strategy to regenerate a Diesel Particulate Filter mounted in the exhaust path of an Internal Combustion engine.

Regeneration of Diesel Particulate Filter (DPF) is the current method to remove deposited soot in the DPF. This occurs periodically during normal vehicle operation or can be triggered by a dealership technician if regeneration has not been possible during normal vehicle operation. If standard regenerations are not successful, said DPF can block, rendering it useless and potentially hazardous.

Soot burn rate (g/s) during regeneration increases exponentially with reaction temperature and linearly with soot load. In the case of excessive soot accumulation, the resulting exothermic heat from the soot burn contributes to the reaction temperature, meaning, that an uncontrolled soot combustion is possible if the regeneration is not carefully controlled.

Thermal runaway can cause the DPF substrate to crack and/or melt, and in extreme circumstances, the DPF substrate itself will burn, whereby extreme temperature form the DPF can lead to vehicle fires in the worst case.

When a DPF is overloaded, the OBD System (on board Diagnose System) of the vehicle will indicate, that the driver needs to bring the vehicle into the dealership for further diagnostics. If the DPF is deemed too full, a replacement of the current DPF is necessary, whereby a replacement of the current DPF by e new one is very costly, not only caused by material costs, but also by manpower costs. Therefore a relative small number of occurrences can lead to large warranty spend on a particular vehicle line.

Therefore, the DPF replacement threshold is set based on the maximum DPF loading, that can be safely regenerated (burned) within the thermal limits of the DPF component itself and various surrounding vehicle subsystems under a worst case driver scenario.

The limited functionality of the current service regeneration strategy within the vehicle ECU meant, that the DPF regeneration temperature could not be easily controlled and therefore high soot loadings could not be safely regenerated (burned). Therefore the maximum DPF loading threshold for DPF replacement is currently not set as high as it potentially could.

Document US2007/0199312 discloses a regeneration strategy to regenerate a Diesel Particulate Filter that includes the steps of heating exhaust gas up to a target temperature below particulate ignition temperature, ramping up the target temperature slowly up to particulate ignition temperature and increasing the temperature quickly up to a temperature above particulate ignition temperature if said temperature has reached the particulate ignition temperature.

Therefore it is an object of the invention to provide a regeneration strategy of a DPF mounted in the exhaust path of an internal combustion engine, respectively of an Diesel engine, in order to obtain, that the maximum DPF loading threshold for DPF replacement is set as high as it potentially could and could therefore be exceeded more easily under normal driving conditions.

The present invention provides a regeneration strategy comprising the steps of:
Heating exhaust gas up to a target temperature at the center location before the inlet of said Diesel Particulate Filter, said target temperature value is set below particulate ignition temperature,
Ramping up the target temperature slowly up to particulate ignition temperature in long term duration in front of said Diesel Particulate Filter,
Increasing the temperature quickly up to a temperature above particulate ignition temperature in front of said Diesel Particulate Filter, if said temperature has reached the particulate ignition temperature.

The foregoing and other features and advantages of the invention will become further apparent from the following detailed description of the presently preferred embodiments, read in conjunction with the accompanying diagrams.

The slow and controlled temperature management of the inventional regeneration process as opposed to the current rapid and uncontrolled process previously adopted allows much higher soot loadings to be safely regenerated within the DPF. The present invention allows successful regeneration of overloaded DPF that would be susceptible to failure and could represent a hazard for the vehicle and passengers in the event of regeneration during normal vehicle operation. By the invention it is also possible to prevent the necessity of replacing the unit (DPF) when the normal soot storage capability has been overcome.

Inventional the regeneration strategy is starting by heating up the temperature at the center location before the inlet of said DPF up to said target temperature value. Said target temperature value is set below the particulate res. soot ignition temperature. The target temperature will then slowly ramped up to soot ignition temperature in a long term duration in front of said DPF.

In a preferred embodiment, the target temperature in front of DPF is set to a value of approximately 83 per cent of the particulate res. soot ignition temperature, i.e. 500°C, only by way of example. For instance the time duration heating up to said target temperature takes approximately 150sec. The temperature is then slowly ramped up to a value of 600°C (particulate res. soot ignition temperature) in front of said DPF over a 1000sec duration.

The rate of exhaust gas flow temperature increase has a direct impact on the resulting soot exothermic rate and the substrate temperature. Once the DPF temperature has reached 600°C and the soot load within the DPF is at a safe level, the temperature is slightly quicker increased up to 107 per cent (for instance) of the particulate res. soot ignition temperature, i.e. 640°C (only by way example) in front of said DPF for a final high temperature phase to clear out all of the remaining soot inside the DPF.

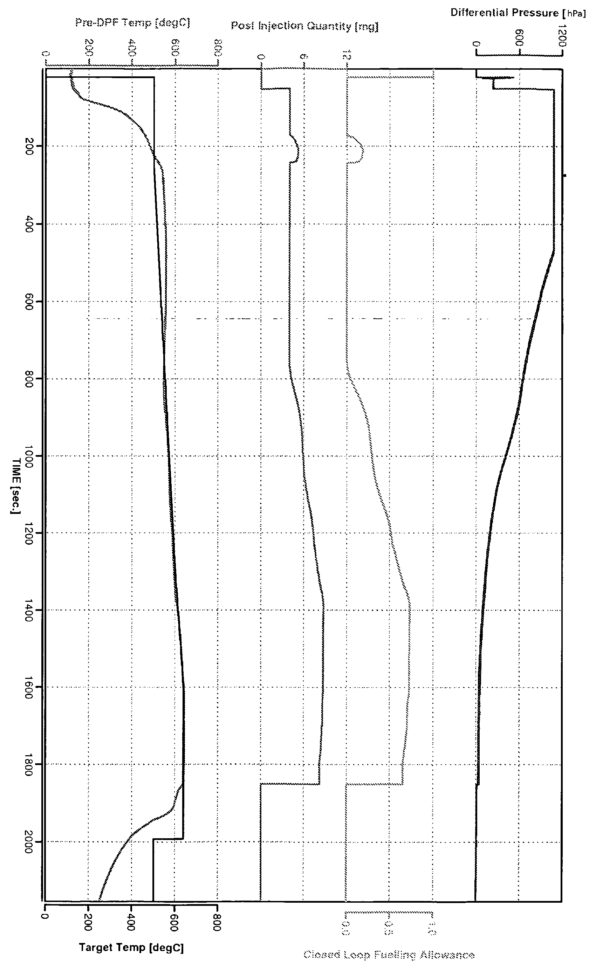

This temperature trace in front of the DPF via the inventional regeneration strategy is displayed in Figure 1 along with corresponding PI (proportional and integral) quantities. The DPF brick and vehicle temperatures are plotted in Figures 2 and 3. A model prediction of the soot loading inside the DPF is shown in Figure 4.

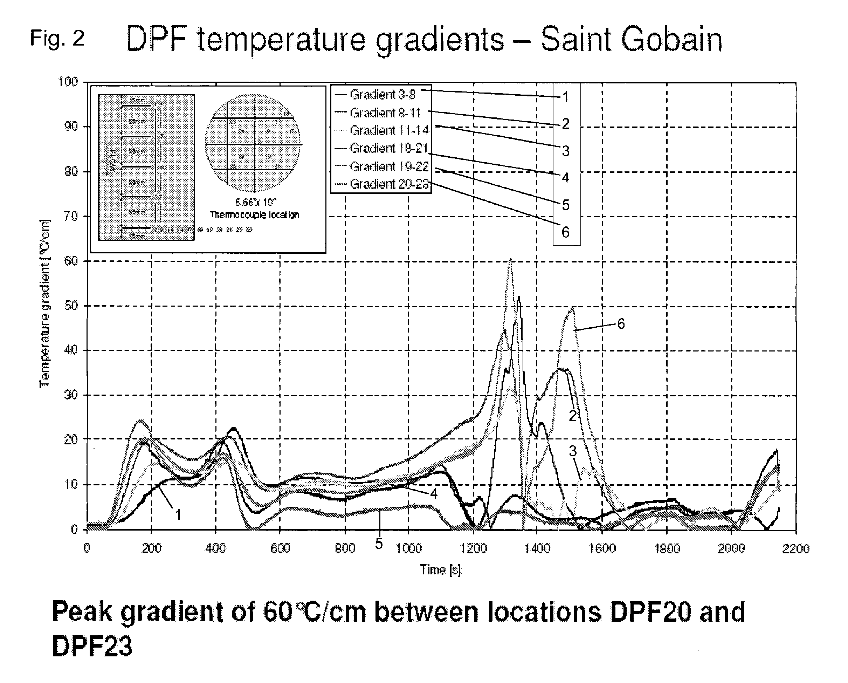

Figure 2 depicts DPF temperatures gradients. In Figure 2 line 1 represents the gradient 3-8. Line 2 represents the gradient 8-11. Line 3 represents the gradient 11-14. Line 4 represents the gradient 18-21. Line 5 represents the gradient 19-22. Line 6 represents the gradient 20-23.

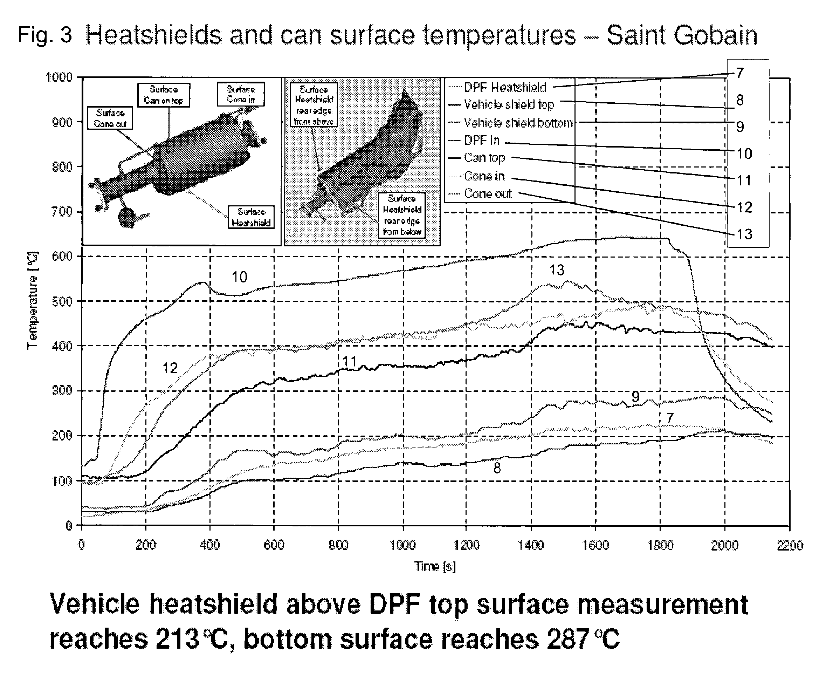

In Figure 3 heatshields and canister (Can) surface temperatures are shown. In Figure 3 line 7 represents DPF heatshield. Line 8 represents Vehicle shield top. Line 9 represents vehicle shield bottom. Line 10 represents DPF in. Line 11 represents Can Top. Line 12 represents Cone in. Line 13 represents Cone out.

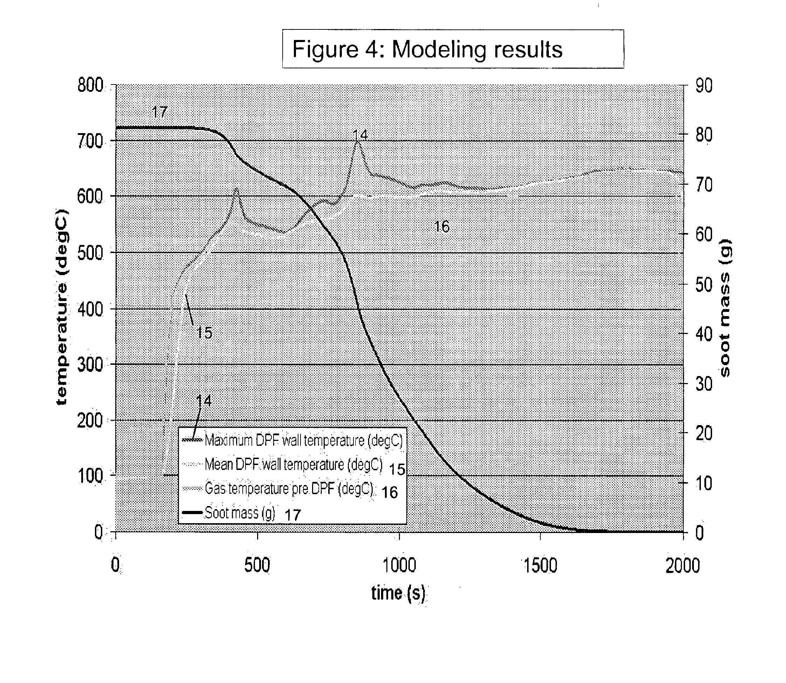

Figure 4 depicts modelling results. Line 14 represents the maximum DPF wall temperature. Line 15 represents Mean DPF wall temperature. Line 16 represents Gas temperature pre DPF. Line 17 represents soot mass.

The inventional control strategy used to track the desired exhaust gas temperature uses a PI (proportional and integral) control system. The feedback loop is closed via a thermocouple placed in the inlet cone of the DPF canister (can) that monitors the temperature of the feed gas. The control action takes place modifying the quantity in the post injection, thus varying heat provided by the engine through the exhaust system. The PI parameters were tuned to provide adequate tracking and avoiding overshoot. To ensure safe operation, the system operates with non linear gains and saturation.

## Claims

1. Regeneration strategy to regenerate a Diesel Particulate Filter mounted in the exhaust path of an Internal Combustion engine,
comprising the steps of:
Heating exhaust gas up to a target temperature at the center location before the inlet of said Diesel Particulate Filter in a time period of approximately 150sec, said target temperature value is set approximately 83 per cent below particulate ignition temperature
Ramping up the target temperature having the set value below particulate ignition temperature slowly up to particulate ignition temperature in long term duration over 1000sec time period in front of said Diesel Particulate Filter,
Increasing the temperature, if said temperature has reached the particulate ignition temperature, quicker as in said ramping up step to a temperature above particulate ignition temperature in front of said Diesel Particulate Filter.

2. Regeneration strategy, according to claim 1,
**characterized in, that**
that said target temperature set 83 per cent below particulate ignition temperature has a value of 500°C.

3. Regeneration strategy, according to claim 1 or 2;
**characterized in, that**
the temperature is slowly ramped up to 600°C in front of said Diesel Particulate Filter over a 1000sec duration.

4. Regeneration strategy according to any preceding claim,
**characterized in, that**
the temperature will be increased after reaching particulate ignition temperature up to 640°C.

5. Regeneration strategy according to any preceding claim, **characterized by**
a PI (proportional and integral) control system, whereby a feedback loop is closed via a thermocouple placed in the inlet cone of said Diesel Particulate Filter.

6. Regeneration strategy according to any preceding claim,
**characterized in, that**
the quantity in the post injection is modified.

## Patentansprüche

1. Regenerationsstrategie, um einen Dieselpartikelfilter, der im Abgasweg einer Brennkraftmaschine angebracht ist, zu regenerieren,
umfassend die folgenden Schritte:
Erhitzen von Abgas bis zu einer Solltemperatur an dem zentralen Ort vor dem Einlass des Dieselpartikelfilters in einer Zeitdauer von etwa 150 s, wobei der Solltemperaturwert auf ungefähr 83 Prozent unter einer Partikelzündtemperatur eingestellt ist,
langsames Hochfahren der Solltemperatur vor dem Dieselpartikelfilter, die den eingestellten Wert unter der Partikelzündtemperatur hat, langfristig bis zu der Partikelzündtemperatur über eine Zeitdauer von 1000 s,
Erhöhen der Temperatur vor dem Dieselpartikelfilter, falls die Temperatur die Partikelzündtemperatur schneller als in dem Hochfahrschritt erreicht hat, auf eine Temperatur oberhalb der Partikelzündtemperatur.

2. Regenerationsstrategie nach Anspruch 1,
**dadurch gekennzeichnet, dass**
die Solltemperatur, die auf 83 Prozent unter der Partikelzündtemperatur eingestellt ist, einen Wert von 500 °C hat.

3. Regenerationsstrategie nach Anspruch 1 oder 2,
**dadurch gekennzeichnet, dass**
die Temperatur vor dem Dieselpartikelfilter über eine Dauer von 1000 s langsam auf 600 °C hochgefahren wird.

4. Regenerationsstrategie nach einem vorhergehenden Anspruch,
**dadurch gekennzeichnet, dass**
die Temperatur nach dem Erreichen der Partikelzündtemperatur auf bis zu 640 °C erhöht wird.

5. Regenerationsstrategie nach einem vorhergehenden Anspruch,
**gekennzeichnet durch**
ein PI-Regelsystem (Proportional- und Integral-Regelsystem), wobei eine Rückkopplungsschleife über ein Thermoelement, das im Einlasskonus des Dieselpartikelfilters angeordnet ist, geschlossen ist.

6. Regenerationsstrategie nach einem vorhergehenden Anspruch,
**dadurch gekennzeichnet, dass**
die Nacheinspritzungsmenge modifiziert wird.

## Revendications

1. Stratégie de régénération d'un filtre à particules diesel monté dans la ligne d'échappement d'un moteur à combustion interne,
comprenant les étapes consistant à :
chauffer les gaz d'échappement à une température cible dans une position centrale en amont de l'entrée dudit filtre à particules diesel dans un délai d'environ 150 secondes,
ladite valeur de température cible étant établie à une valeur inférieure d'environ 83 % à la température d'inflammation des particules,
faire monter en puissance la température cible dont la valeur de consigne est inférieure à la température d'inflammation des particules de manière à ce qu'elle augmente lentement jusqu'à la température d'inflammation des particules dans un délai prolongé de 1000 secondes, en amont dudit filtre à particules diesel,
accroître la température, si ladite température a atteint la température d'inflammation des particules plus rapidement que dans ladite étape de montée en puissance, jusqu'à ce qu'elle atteigne une température supérieure à la température d'inflammation des particules,
en amont dudit filtre à particules diesel.

2. Stratégie de régénération selon la revendication 1,
**caractérisée en ce que**
ladite température cible inférieure d'environ 83 % à la température d'inflammation des particules a une valeur de 500° C.

3. Stratégie de régénération selon la revendication 1 ou la revendication 2,
**caractérisée en ce que**
la température est soumise lentement à une montée en puissance à une valeur de 600° C en amont dudit filtre à particules diesel dans un délai de 1000 secondes.

4. Stratégie de régénération selon l'une quelconque des revendications précédentes,
**caractérisée en ce que**
la température sera augmentée à 640° C après avoir atteint la température d'inflammation des particules.

5. Stratégie de régénération selon l'une quelconque des revendications précédentes,
**caractérisée par**
l'emploi d'un système de régulation PI (proportionnelle et intégrée), une boucle d'asservissement étant fermée par l'intermédiaire d'un thermocouple placé dans le cône d'admission dudit filtre à particules diesel.

6. Stratégie de régénération selon l'une quelconque des revendications précédentes,
**caractérisée en ce que**
la quantité est modifiée dans la post injection.
